# EUROPEAN PATENT SPECIFICATION

(11) **EP 1 953 428 B1**
(45) Date of publication and mention of the grant of the patent: **14.03.2012**
(21) Application number: 08250190.9
(22) Date of filing: 15.01.2008
(51) Int. Cl.: F16H 63/06, F16H 61/662, H03K 7/08

(54) **Transmission**
Getriebe
Transmission

(30) Priority: 31.01.2007 JP 2007021241
(43) Date of publication of application: 06.08.2008
(73) Proprietor: Yamaha Hatsudoki Kabushiki Kaisha, Iwata-shi, Shizuoka 438-8501 (JP)
(72) Inventor: Asaoka, Ryousuke c/o Yamaha Hatsudoki K. K., Shizuoka-ken 438-8501 (JP)
(74) Representative: Moreland, David

(56) References cited:
- EP-A2- 1 480 324
- US-A- 5 115 395
- US-A- 5 285 389

## Description

### FIELD OF THE INVENTION

The present invention relates to a transmission, a vehicle having the transmission, and a control device and a control method for the transmission.

### BACKGROUND TO THE INVENTION

Electronically controlled continuously variable transmissions (hereinafter referred to as "ECVTs") are known, for example from JP-A-2004-19740 which shows the features of the preamble of claim 1. ECVTs can adjust the gear ratio irrespective of the engine speed. Therefore, ECVTs are widely used in vehicles such as scooters.

An ECVT includes an input shaft, an output shaft, and a gear ratio change motor for changing the gear ratio between the input shaft and the output shaft. In general, the gear ratio change motor is driven by applying a pulse voltage with a view to reducing power loss.

Vehicles having the conventional ECVT, however, may generate gear ratio change shocks at gear ratio changes and thus provide poor drivability.

For example, in the case where a driving source unit including the ECVT is directly attached to a vehicle body frame so as to be pivotable, such gear ratio change shocks are transmitted to the rider particularly easily, which may further deteriorate the drivability.

The present invention has been made in view of the foregoing problem, and therefore has an object to improve the drivability of a vehicle having an ECVT by suppressing gear ratio change shocks.

### SUMMARY OF THE INVENTION

A transmission in accordance with the present invention includes a gear ratio change mechanism, a motor driving section, and a control section. The gear ratio change mechanism has an input shaft, an output shaft, and a motor. The motor continuously varies the gear ratio between the input shaft and the output shaft. The motor driving section applies a pulse voltage to the motor. The control section outputs a control signal to the motor driving section. At least one of the duty ratio and the pulse height of the pulse voltage is changed according to the control signal. The control section outputs to the motor driving section a low-pass filtered control signal after applying a low-pass filtering process to the control signal.

A vehicle in accordance with the present invention includes the gear ratio change mechanism in accordance with the present invention.

Also described herein is a control device that controls a gear ratio change mechanism having an input shaft, an output shaft, and a motor for contiguously varying the gear ratio between the input shaft and the output shaft. The control device in accordance with the present invention includes a motor driving section and a control section. The motor driving section applies a pulse voltage to the motor. The control section outputs a control signal to the motor driving section. At least one of the duty ratio and the pulse height of the pulse voltage is changed according to the control signal. The control section outputs to the motor driving section a low-pass filtered control signal after applying a low-pass filtering process to the control signal.

A control method in accordance with the present invention controls a gear ratio change mechanism having an input shaft, an output shaft, and a motor for continuously varying the gear ratio between the input shaft and the output shaft. The control method in accordance with the present invention includes: applying a low-pass filtering process to a control signal for changing at least one of the duty ratio and the pulse height of a pulse voltage; and applying to the motor the pulse voltage controlled by a low-pass filtered control signal to drive the motor.

Aspects of the present invention are set forth in the independent claims.

Preferred features of the present invention are set forth in the dependent claims

The present invention can improve the drivability by suppressing gear ratio change shocks.

### BRIEF DESCRIPTION OF THE DRAWINGS

These and otyher aspects of the present invention will now be described, by way of example only, with reference to the accompanying drawings, in which:
FIG. 1 is a side view of a two wheeled motorized vehicle to which the present invention may be applied;
FIG. 2 is a partial cross sectional view of an engine unit as viewed from a side thereof;
FIG. 3 is a partial cross sectional view of the engine unit;
FIG. 4 is a block diagram illustrating a control system of the two wheeled motorized vehicle;
FIG. 5 is a block diagram illustrating sheave position control;
FIG. 6 is a schematic diagram for illustrating changes in the duty ratio of a pulse voltage to be applied to a motor, specifically in which:
   FIG. 6(a) is a graph representing changes in the duty ratio of the pulse voltage to be applied to the motor without a low-pass filtering process applied to a PWM signal; and
   FIG. 6(b) is a graph representing changes in the duty ratio of the pulse voltage to be applied to the motor with a low-pass filtering process applied to the PWM signal;
FIG. 7 is a schematic diagram illustrating changes in the waveform of the pulse voltage in the case where the PWM signal before the low-pass filtering process is directly output to a driving circuit;
FIG. 8 is a schematic diagram showing changes in the waveform of the pulse voltage in the case where the PWM signal after the low-pass filtering process is output to the driving circuit;
FIG. 9 is a schematic diagram illustrating the relationship between the duty ratio of the pulse voltage to be applied to the motor and the current that passes through the motor;
FIG. 10 is a graph showing the current that passes through the motor in the case where the low-pass filtering process is not applied to the PWM signal, specifically in which:
   FIG. 10(a) is a graph representing the position of a movable sheave half of a primary sheave;
   FIG. 10(b) is a graph representing the current that passes through the motor; and
   FIG. 10(c) is a graph representing the duty ratio of the pulse voltage to be applied to the motor;
FIG. 11 is a graph showing the current that passes through the motor in the case where the low-pass filtering process is applied to the PWM signal, specifically in which:
   FIG. 11(a) is a graph representing the position of the movable sheave half of the primary sheave;
   FIG. 11(b) is a graph representing the current that passes through the motor 30; and

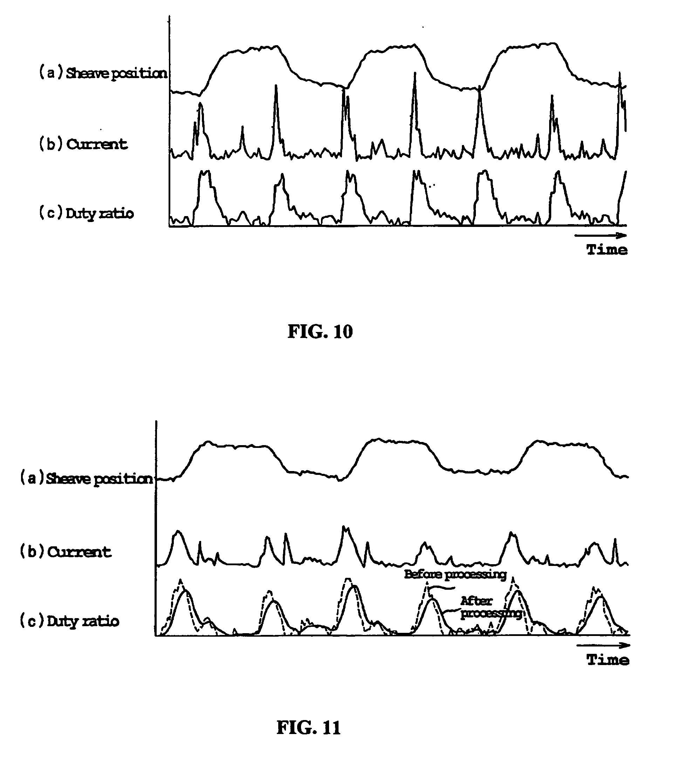

   FIG. 10(c) is a graph representing the duty ratio of the pulse voltage to be applied to the motor;

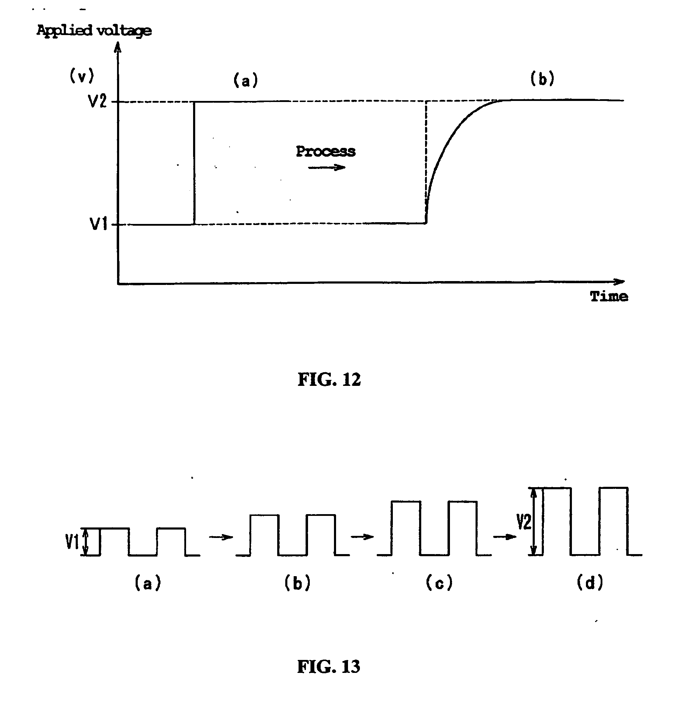

FIG. 12 is a schematic diagram for explaining changes in the pulse height of the pulse voltage to be applied to the motor (applied voltage), specifically in which:
   FIG. 12(a) is a graph representing changes in the pulse height of the pulse voltage (applied voltage) to be applied to the motor without the low-pass filtering process applied to the PWM signal; and
   FIG. 12(b) is a graph representing changes in the pulse height of the pulse voltage (applied voltage) to be applied to the motor with the low-pass filtering process applied to the PWM signal; and
FIG. 13 is a schematic diagram showing changes in the waveform of the pulse voltage in the case where a PAM signal after the low-pass filtering process is output to the driving circuit.

### DETAILED DESCRIPTION OF THE DRAWINGS

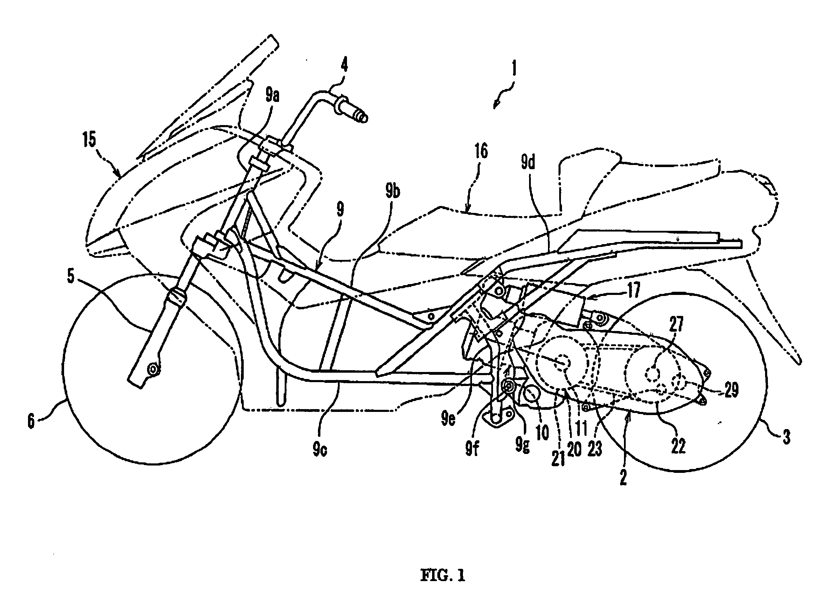

A detailed description will hereinafter be made of a preferred embodiment of the present invention used within a two wheeled motorized vehicle 1 shown in FIG. 1 as an example. A so-called scooter type is provided as an example of a vehicle in the description of this embodiment. However, the vehicle of the present invention is not limited to the scooter type two wheeled motorized vehicle. The vehicle of the present invention may be, for example, a non-scooter type two wheeled motorized vehicle. Specifically, the vehicle of the present invention may be an off-road type, motorcycle type, scooter type, or so-called moped type two wheeled motorized vehicle. In addition, the vehicle of the present invention may be a straddle type vehicle other than the two wheeled motorized vehicle. Specifically, the vehicle of the present invention may be, for example, an ATV (All Terrain Vehicle) or the like. Further, the vehicle of the present invention may be a vehicle other than the straddle type vehicle such as a four-wheeled vehicle.

FIG. 1 is a side view of the two wheeled motorized vehicle 1. The two wheeled motorized vehicle 1 includes a vehicle body frame 9, an engine unit 2 as a driving source unit, a rear wheel 3, and a front wheel 6.

The vehicle body frame 9 includes a head pipe 9a disposed at the front end of the vehicle body, an upper tube 9b, a down tube 9c, a seat rail 9d, and a vertical frame member 9e. Steering handlebars 4 are attached to the upper end of the head pipe 9a and a front fork 5 is connected to the lower end of the head pipe 9a. A front wheel 6 is rotatably attached to the distal end of the front fork 5. The front wheel 6 is not connected to the engine unit 2. In other words, the front wheel 6 is a driven wheel.

The down tube 9c extends obliquely rearward and downward from the head pipe 9a. The down tube 9c is bent at its intermediate portion to extend rearward and generally horizontally therefrom. The upper tube 9b extends obliquely rearward and downward above the down tube 9c from the connection between the head pipe 9a and the down tube 9c. The seat rail 9d is connected to the generally horizontal portion of the down tube 9c. The seat rail 9d extends obliquely rearward and upward from the connection with the down tube 9c. The lower end of the upper tube 9d is connected to the seat rail 9d. An intermediate portion of the seat rail 9d and the rear end of the down tube 9c is coupled via the vertical frame member 9e.

A vehicle body cover or fairing 15 is provided to cover the vehicle body frame 9. A seat 16 for the rider to ride on is attached to the vehicle body cover 15.

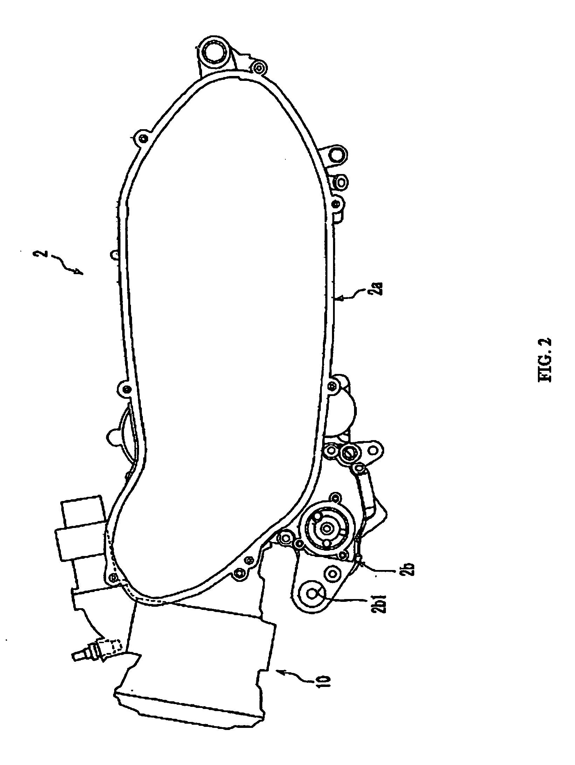

The engine unit 2 is directly attached to the vehicle body frame 9 so as to be pivotable. Specifically, as shown in FIG. 1, a pivot member 9f is attached to the vertical frame member 9e of the vehicle body frame 9. The pivot member 9f is formed in the shape of a cylinder extending in the vehicle width direction. A pivot shaft 9g extending in the vehicle width direction is attached to the pivot member 9f. On the other hand, as shown in FIG. 2, a pivot part 2b is formed at a front and lower portion of a housing 2a of the engine unit 2. The pivot part 2b is formed with a through hole 2b1 having generally the same inner diameter as that of the pivot member 9f. The pivot shaft 9g is rotatably inserted into the through hole 2b1.

As shown in FIG. 1, the engine unit 2 is connected to an intermediate portion of the seat rail 9d via a rear cushion or suspension unit 17. The rear cushion unit 17 suppresses oscillations of the engine unit 2.

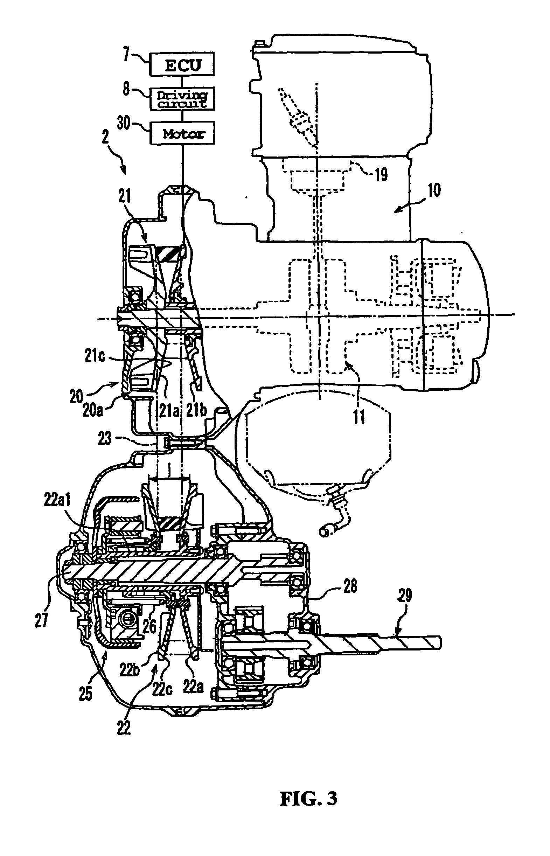

A description will now be made of the construction of the engine unit 2 with reference to FIG. 3.

As shown in FIG. 3, the engine unit 2 includes an engine 10 and a transmission 20. In the description of this embodiment, the engine 10 is a 4-cycle forced-air-cooled engine. However, the engine 10 may be another type of engine. The engine 10 may be, for example, a water-cooled engine. The engine 10 may be a 2-cycle engine. A driving source other than engines such as an electric motor may be provided in place of the engine 10. In other words, the driving source of the present invention is not limited to specific types. As shown in FIG. 3, the engine 10 includes a crankshaft 11 coupled to a piston 19.

The transmission 20 is made up of a gear ratio change mechanism 20a, an ECU 7 as a control section, and a driving circuit 8 as a motor driving section. In the description of this embodiment, the gear ratio change mechanism 20a is a belt type ECVT. However, the gear ratio change mechanism 20a is not limited to a belt type ECVT. The gear ratio change mechanism 20a may be, for example, a toroidal type ECVT.

The gear ratio change mechanism 20a includes a primary sheave 21, a secondary sheave 22, and a V-belt 23. The V-belt 23 is wound around the primary sheave 21 and the secondary sheave 22. The V-belt 23 has a generally V-shaped cross section.

The primary sheave 21 rotates together with the crankshaft 11 as an input shaft. The primary sheave 21 includes a fixed sheave half 21a and a movable sheave half 21b. The fixed sheave half 21a is fixed to one end of the crankshaft 11. The movable sheave half 21b is disposed to oppose the fixed sheave half 21a so as to be displaceable in the axial direction of the crankshaft 11. The movable sheave half 21b is movable in the axial direction of the crankshaft 11. Respective opposing surfaces of the fixed sheave half 21a and the movable sheave half 21b form a belt groove 21c for receiving the V-belt 23. The belt groove 21c is wider toward the radially outer side of the primary sheave 21.

The width of the belt groove 21c of the primary sheave 21 is changed as a motor 30 drives the movable sheave half 21b in the axial direction of the crankshaft 11. In the description of this embodiment, the motor 30 is driven by pulse width modulation (PWM).

The secondary sheave 22 is disposed rearward of the primary sheave 21. The secondary sheave 22 is attached to a driven shaft 27 via a centrifugal clutch 25. Specifically, the secondary sheave 22 includes a fixed sheave half 22a, which is provided with a cylindrical output shaft 22a1 that is formed integrally therewith, and a movable sheave half 22b. The movable sheave half 22b opposes the fixed sheave half 22a. The fixed sheave half 22a is coupled to the driven shaft 27 via the centrifugal clutch 25. The movable sheave half 22b is movable in the axial direction of the driven shaft 27. Respective opposing surfaces of the fixed sheave half 22a and the movable sheave half 22b form a belt groove 22c for receiving the V-belt 23. The belt groove 22c is wider toward the radially outer side of the secondary sheave 22.

The movable sheave half 22b is urged by a spring 26 in the direction of reducing the width of the belt groove 22c. When the motor 30 is driven to reduce the width of the belt groove 21c of the primary sheave 21 and thus increase the winding diameter of the V-belt 23 around the primary sheave 21, the V-belt 23 is pulled toward the radially inner side of the secondary sheave 22. This causes the movable sheave half 22b to move in the direction of increasing the width of the belt groove 22c against the urging force of the spring 26. This in turn reduces the winding diameter of the V-belt 23 around the secondary sheave 22. As a result, the gear ratio of the gear ratio change mechanism 20a is changed.

The centrifugal clutch 25 is engaged and disengaged according to the rotational speed of the fixed sheave half 22a. Specifically, when the rotational speed of the fixed sheave half 22a is less than a predetermined rotational speed, the centrifugal clutch 25 is not engaged. Therefore, the rotation of the fixed sheave half 22a is not transmitted to the driven shaft 27. On the other hand, when the rotational speed of the fixed sheave half 22a is equal to or more than the predetermined rotational speed, the centrifugal clutch 25 is engaged. Therefore, the rotation of the fixed sheave half 22a is transmitted to the driven shaft 27.

A speed reduction mechanism 28 is coupled to the driven shaft 27. The driven shaft 27 is coupled to an axle 29 via the speed reduction mechanism 28. As shown in FIG. 1, the rear wheel 3 is attached to the axle 29 for rotation. Therefore, as the driven shaft 27 rotates, the axle 29 and the rear wheel 3 rotate together.

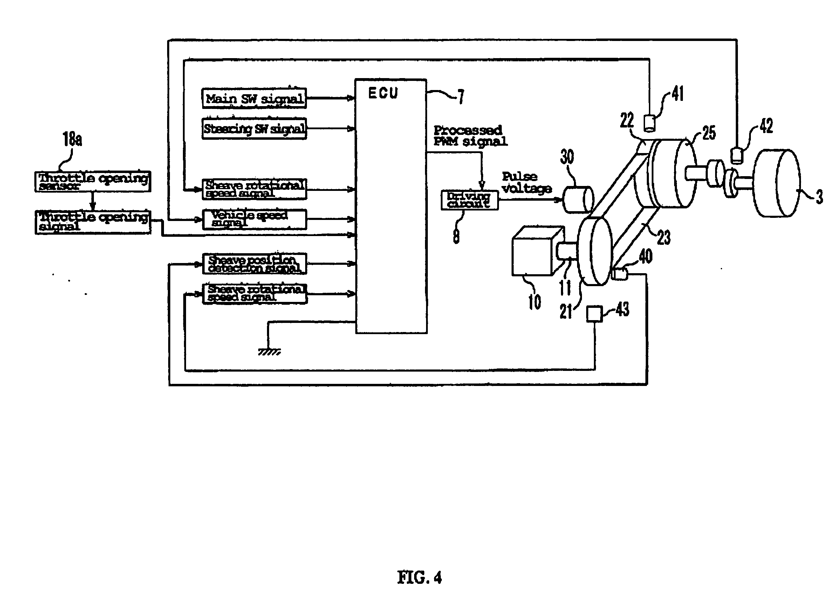

A detailed description will now be made of a control system of the two wheeled motorized vehicle 1 with reference to FIG. 4.

As shown in FIG. 4, a sheave position sensor 40 is connected to the ECU 7. The sheave position sensor 40 detects the position of the movable sheave half 21b of the primary sheave 21 relative to the fixed sheave half 21a (hereinafter referred to as "sheave position*"*). In other words, the sheave position sensor 40 detects the distance (1) between the fixed sheave half 21a and the movable sheave half 21b in the axial direction of the crankshaft 11. The sheave position sensor 40 outputs to the ECU 7 the detected distance (1) as a sheave position detection signal. The sheave position sensor 40 may be, for example, a potentiometer or the like.

To the ECU 7 are connected a primary sheave rotational speed sensor 43, a secondary sheave rotational speed sensor 41, and a vehicle speed sensor 42. The primary sheave rotational speed sensor 43 detects the rotational speed of the primary sheave 21. The primary sheave rotational speed sensor 43 outputs to the ECU 7 the detected rotational speed of the primary sheave 21 as a sheave rotational speed signal. The secondary sheave rotational speed sensor 41 detects the rotational speed of the secondary sheave 22. The secondary sheave rotational speed sensor 41 outputs to the ECU 7 the detected rotational speed of the secondary sheave 22 as a sheave rotational speed signal. The vehicle speed sensor 42 detects the rotational speed of the rear wheel 3. The vehicle speed sensor 42 outputs to the ECU 7 a vehicle speed signal based on the detected rotational speed.

A steering switch attached at the steering handlebars 4 shown in FIG. 1 is connected to the ECU 7. As shown in FIG. 4, the steering switch outputs a steering SW signal when the steering switch is operated by the rider.

A throttle opening sensor 18a outputs a throttle opening signal to the ECU 7 in the same way as described above.

The ECU 7 performs feedback control of the position of the movable sheave half 21b of the primary sheave 21 based on the vehicle speed signal and so forth. In other words, the ECU 7 performs feedback control of the distance (1) based on the vehicle speed signal and so forth.

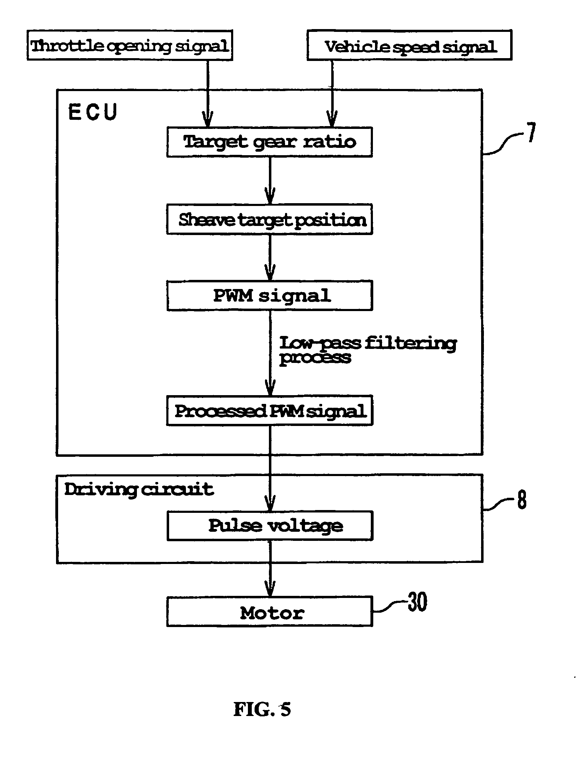

Specifically, as shown in FIG. 5, the ECU 7 determines a target gear ratio based on the throttle opening and the vehicle speed. The ECU 7 then calculates a sheave target position based on the determined target gear ratio. In other words, the ECU 7 calculates a target distance (1) between the movable sheave half 21b and the fixed sheave half 21a based on the determined target gear ratio. In order to displace the movable sheave half 21b to the sheave target position, the ECU 7 always applies a low-pass filtering process to a pulse width modulation (PWM) signal in accordance with the current position of the movable sheave half 21b and the sheave target position, before outputting the signal to the driving circuit 8. As shown in FIG. 4, the driving circuit 8 applies to the motor 30 a pulse voltage in accordance with the pulse width modulation signal. This drives the movable sheave half 21b to adjust the gear ratio.

"Applying a low-pass filtering process to a PWM signal" means gradually changing the PWM signal. That is, "applying a low-pass filtering process to a PWM signal" means moderating changes in the PWM signal. This allows the duty ratio of the pulse voltage to be applied to the motor 30 to change gradually rather than abruptly.

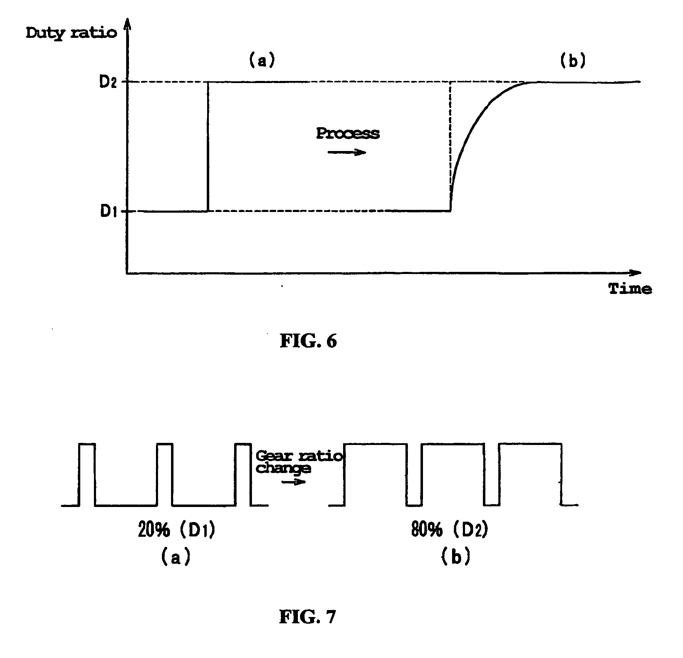

Specifically, in the case where the PWM signal before the low-pass filtering process is directly output to the driving circuit 8, the duty ratio will change abruptly from the current value D₁ to D₂ as shown in FIG. 6(a), for example. The duty ratio will change abruptly as shown in FIG. 7, for example, from 20% in FIG. 7(a) to 80% in FIG. 7(b).

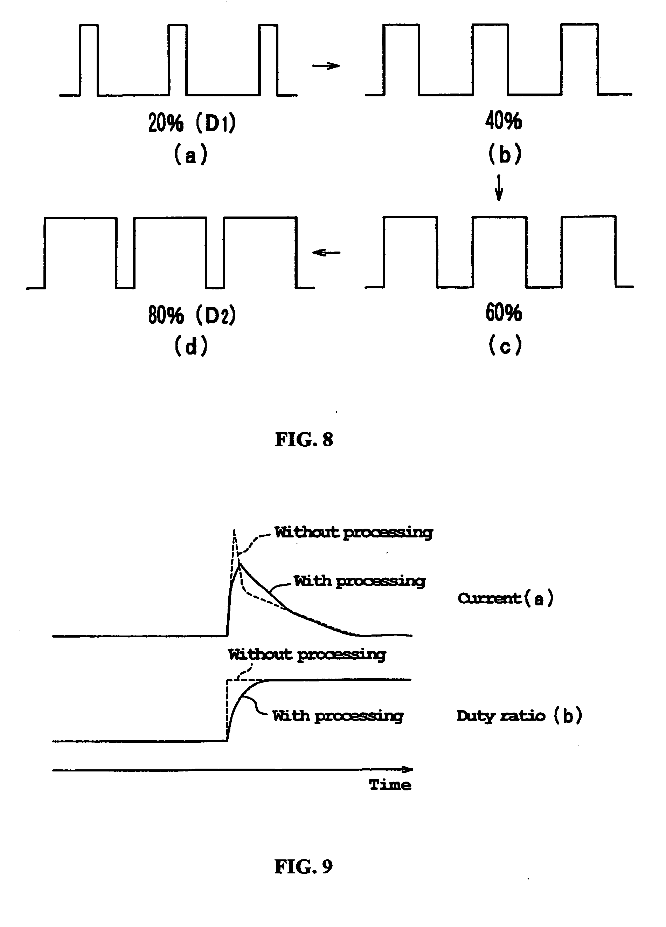

In contrast, the low-pass filtering process processes the PWM signal into a signal with a duty ratio that changes moderately from D₁ to D₂. Therefore, in the case where the PWM signal after the low-pass filtering process is output to the driving circuit 8, the duty ratio changes moderately from D₁ to D₂ as shown in FIG. 6(b). The duty ratio will change moderately as shown in FIG. 8, for example, from 20% in FIG. 8(a) to 40% in FIG. 8(b), then to 60% in FIG. 8(c), and finally to 80% in FIG. 8(d). Therefore, the magnitude of the effective voltage to be applied to the motor 30 also changes moderately.

In this embodiment, as has been described above, a control signal (specifically, a PWM signal) after being subjected to a low-pass filtering process in the ECU 7 is output to the driving circuit 8 as the motor driving section. Then, a pulse voltage in accordance with the low-pass filtered control signal is applied to the motor 30. Thus, the duty ratio of the pulse voltage to be applied to the motor 30 changes moderately as shown in FIG. 6(b). As a result, the effective voltage to be applied to the motor 30 changes moderately. Hence, the torque of the motor 30 changes moderately rather than abruptly. Thus, gear ratio change shocks that occur in the two wheeled motorized vehicle 1 at gear ratio changes achieved by the motor 30 can be suppressed. This results in improved drivability of the two wheeled motorized vehicle 1. From the viewpoint of suppressing gear ratio change shocks in the two wheeled motorized vehicle 1, the PWM signal to be output to the driving circuit 8 is preferably always low-pass filtered.

From the viewpoint of further suppressing gear ratio change shocks that occur in the two wheeled motorized vehicle 1, changes in the effective voltage to be applied to the motor 30 are preferably made more moderate. Therefore, from the viewpoint of further suppressing gear ratio change shocks that occur in the two wheeled motorized vehicle 1, it is preferable that the cutoff frequency of the low-pass filtering process to be performed on the PWM signal is relatively low. A relatively low cutoff frequency of the low-pass filtering process, however, accordingly reduces the tracking speed of the motor 30 at the time when the target gear ratio is changed. As a result, the swiftness of the operation of the two wheeled motorized vehicle is reduced. Therefore, it is preferable that the cutoff frequency for a two wheeled motorized vehicle that requires swift operation is relatively high. In other words, it is preferable to set a relatively low cutoff frequency for types of two wheeled motorized vehicles that do not require very swift operation but require that gear ratio change shocks in the vehicle be particularly small. On the other hand, it is preferable to set a relatively high cutoff frequency for types of vehicles that require swift operation rather than suppression of gear ratio change shocks. That is, the cutoff frequency can be set as appropriate according to the type of the vehicle.

For example, in a two wheeled motorized vehicle in which the engine unit 2 and the vehicle body frame 9 are coupled to each other via one or a plurality of link mechanisms that are pivotable relative to the vehicle body frame 9, and in which fluctuations in the torque generated at the rear wheel 3 are thus not directly transmitted to the vehicle body frame 9, the vehicle body frame 9 does not receive very large gear ratio change shocks even at abrupt changes in the gear ratio. Therefore, there is no significant demand to suppress abrupt changes in the effective voltage to be applied to the motor 30.

In contrast, in the two wheeled motorized vehicle 1 of this embodiment in which the engine unit 2 as the driving source unit is directly attached to the vehicle body frame 9 so as to be pivotable, vibrations and oscillations in the front-and-rear direction applied to the engine unit 2 are directly transmitted to the vehicle body frame 9. Hence, fluctuations in the torque generated at the rear wheel 3 are easily transmitted to the vehicle body frame 9. This permits gear ratio change shocks to be easily transmitted to the vehicle body frame 9 while allowing swift operation. Therefore, there is strong demand to suppress abrupt changes in the effective voltage to be applied to the motor 30 for the two wheeled motorized vehicle 1 of this embodiment in which the engine unit 2 as the driving source unit is directly attached to the vehicle body frame 9 so as to be pivotable. Thus, it is particularly effective to suppress abrupt changes in the effective voltage to be applied to the motor 30 as in this embodiment. In addition, in the two wheeled motorized vehicle 1 of this embodiment, it is preferable that the cutoff frequency of the low-pass filtering process is relatively low.

In addition, suppressing abrupt changes in the effective voltage to be applied to the motor 30 by applying the low-pass filtering process to the PWM signal can reduce the inrush current into the motor 30.

The number of times the motor 30 is driven in reverse for changing the gear ratio and the number of times when the motor 30 is activated are very large compared to motors for normal use. Therefore, there frequently occurs an inrush current at the activation and the reverse driving of the motor 30. As a result, a large burden is placed on the motor 30 and the driving circuit 8 therefor, reducing the durability of the motor 30 and the driving circuit 8.

In the case where the low-pass filtering process is not applied to the PWM signal, the duty ratio of the pulse voltage to be applied to the motor 30 changes abruptly as indicated by the dotted line in FIG. 9, for example. As a result, the effective voltage to be applied to the motor 30 also changes abruptly. Therefore, a large inrush current is generated when the duty ratio of the pulse voltage to be applied to the motor 30 changes abruptly as indicated by the dotted line of FIG. 9(a). Thus, a large inrush current occurs when the position of the movable sheave half 21b changes as shown in FIG. 10(b), placing a load on the motor 30 and the driving circuit 8.

In contrast, applying the low-pass filtering process to the PWM signal suppresses abrupt changes in the effective voltage to be applied to the motor 30 as indicated by the solid line in FIG. 9(b). As a result, an increase in the current that flows into the motor 30 is suppressed as indicated by the solid line in FIG. 9(a). In other words, an inrush current that flows into the motor 30 can be made smaller. Thus, an inrush current that occurs when the position of the movable sheave half 21b changes can be suppressed as shown in FIG. 11(b), reducing the load on the motor 30 and the driving circuit 8. Hence, the service life of the motor 30 and the driving circuit 8 can be extended.

In this embodiment, the motor 30 is controlled by PWM. Therefore, power loss can be reduced when the motor 30 is driven, and a high energy efficiency can be achieved, with a simple circuitry.

In the description of the above embodiment, the duty ratio of the pulse voltage to be applied to the motor 30 is changed according to the control signal. However, the pulse height of the pulse voltage to be applied to the motor 30 (applied voltage) may be changed according to the control signal. In other words, the motor 30 may be controlled by PAM (pulse amplitude modulation). In this case, a PAM signal for changing the pulse height of the pulse voltage to be applied to the motor 30 is output as a control signal from the ECU 7 to the driving circuit 8 after being subjected to a low-pass filtering process. Therefore, the pulse height of the pulse voltage to be applied to the motor 30 (applied voltage) changes moderately as shown in FIGs. 12 and 13. As a result, the effective voltage to be applied to the motor 30 also changes moderately with gear ratio change shocks suppressed. Hence, it is possible to improve the drivability and to make the inrush current that flows into the motor 30 and the driving circuit 8 smaller, as in the case of the above embodiment.

Although the two wheeled motorized vehicle 1 of the so-called scooter type is provided as an example in the description of the above embodiment, the vehicle of the present invention is not limited as such. The vehicle of the present invention may be, for example, a non-scooter type two wheeled motorized vehicle. Specifically, the vehicle of the present invention may be an off-road type, motorcycle type, scooter type, or so-called moped type two wheeled motorized vehicle. In addition, the vehicle of the present invention may be a straddle type vehicle other than the two wheeled motorized vehicle. Specifically, the vehicle of the present invention may be, for example, an ATV (All Terrain Vehicle) or the like. Further, the vehicle of the present invention may be a vehicle other than the straddle type vehicle such as a four-wheeled vehicle.

It should be noted that the present invention is especially effective for two wheeled motorized vehicles. In relatively heavyweight types of vehicles such as four-wheeled vehicles, gear ratio change shocks are not easily transmitted to the rider and therefore are not a relatively significant problem. In contrast, in two wheeled motorized vehicles, which are relatively lightweight, gear ratio change shocks are easily transmitted to the rider. Hence, gear ratio change shocks are a relatively significant problem.

The gear ratio change mechanism 20a is not limited to a belt type ECVT. The gear ratio change mechanism 20a may be, for example, a toroidal type ECVT.

In the description of the above embodiment, the low-pass filtering process is applied to the control signal by software processing in the ECU 7. In the present invention, however, the low-pass filtering process may be applied to the control signal by a low-pass filtering circuit for performing a low-pass filtering process disposed between the ECU 7 and the driving circuit 8.

It is preferable to set a relatively low cutoff frequency for types of two wheeled motorized vehicles that do not require very swift operation but require that gear ratio change shocks in the vehicle be particularly small. On the other hand, it is preferable to set a relatively high cutoff frequency for types of vehicles that require swift operation rather than suppression of gear ratio change shocks. That is, the cutoff frequency can be set as appropriate according to the type of the vehicle.

In the description of the above embodiment, the low-pass filtering process is always applied to the control signal. However, the present invention is not limited to such a configuration. For example, settings may be made to perform the low-pass filtering process on the control signal only when the gear ratio is changed relatively significantly. Alternatively, the rider may be allowed to select between an ON mode where the low-pass filtering process is applied to the control signal and an OFF mode where the low-pass filtering process is not applied to the control signal. Specifically, a selection switch for allowing selection between the ON mode and the OFF mode may be disposed in the vehicle in order to apply the low-pass filtering process to the control signal only when the ON mode is selected by the rider.

In the description of the above embodiment and Modification 1, only one of the duty ratio and the pulse height of the pulse voltage to be applied to the motor 30 is changed according to the control signal. However, both the duty ratio and the pulse height of the pulse voltage to be applied to the motor 30 may be changed according to the control signal.

The term "driving source" refers to a device that generates power. The "driving source" may be, for example, an internal combustion engine, an electric motor or the like.

The term "pulse height of pulse voltage" refers to the magnitude of the pulse voltage to be actually applied to the motor 30. That is, the term "effective voltage" refers to a value obtained by multiplying the magnitude of the pulse voltage by the duty ratio.

The present invention is effectively applicable to ECVTs.

### Description of Reference Numerals and Symbols

1: two wheeled motorized vehicle
2: engine unit (driving source unit)
3: rear wheel (driving wheel)
6: front wheel (driven wheel)
7: ECU (control section)
8: driving circuit (motor driving section)
9: vehicle body frame
10: engine
11: crankshaft (input shaft)
20: transmission
20a:gear ratio change mechanism
21: primary sheave
21a:fixed sheave half
21b:movable sheave half
22: secondary sheave
22a:fixed sheave half
22a1:output shaft
22b:movable sheave half
23: V-belt
25: centrifugal clutch
27: driven shaft
28: speed reduction mechanism
29: axle
30: motor
40: sheave position sensor
42: vehicle speed sensor

## Claims

1. A transmission (20) comprising:
a gear ratio change mechanism (20a) having an input shaft (11), an output shaft (22a1), and a motor (30) for continuously varying a gear ratio between the input shaft (11) and the output shaft (22a1);
a motor driving section (8) for applying a pulse voltage to the motor (30); and
a control section (7) for outputting to the motor driving section (8) a control signal for changing at least one of a duty ratio and a pulse height of the pulse voltage, **characterized in that**
the control section (7) outputs to the motor driving section (8) a low-pass filtered control signal after applying a low-pass filtering process to the control signal.

2. The transmission (20) according to claim 1,
wherein the control section (7) always applies a low-pass filtering process to the control signal.

3. The transmission (20) according to claim 1 or 2,
wherein the control signal is a pulse width modulation control signal for controlling the duty ratio of the pulse voltage.

4. A vehicle (1) comprising a transmission (20) according to claim 1, 2 or 3.

5. The vehicle (1) according to claim 4, further comprising:
a driving source connected to the input shaft (11) to form a driving source unit (2) in conjunction with the transmission (20); and
a vehicle body frame (9),
wherein the driving source unit (2) is directly attached to the vehicle body frame (9) so as to be pivotable.

6. The vehicle (1) according to claim 4 or 5, provided in the form of a two wheeled motorized vehicle.

7. A control method for a gear ratio change mechanism (20a) having an input shaft (11), an output shaft (22a1), and a motor (30) for continuously varying a gear ratio between the input shaft (11) and the output shaft (22a1), the control method comprising:
applying a low-pass filtering process to a control signal for changing at least one of a duty ratio and a pulse height of a pulse voltage; and
applying to the motor (30) the pulse voltage controlled by a low-pass filtered control signal to drive the motor (30).

## Patentansprüche

1. Getriebe (20), das Folgendes umfasst:
einen Übersetzungsverhältnisänderungsmechanismus (20a) mit einer Antriebswelle (11), einer Abtriebswelle (22a1) und einem Motor (30) zum kontinuierlichen variieren eines Übersetzungsverhältnisses zwischen der Antriebswelle (11) und der Abtriebswelle (22a1);
einen motorgetriebenen Teil (8) zum Anlegen einer Impulsspannung an den Motor (30); und
einen Steuerteil (7) zum Ausgeben eines Steuersignals an den Motorantriebsteil (8) zum Ändern wenigstens eines Tastverhältnisses und einer Impulshöhe der Impulsspannung, **dadurch gekennzeichnet, dass**
der Steuerteil (7) nach dem Anwenden eines Tiefpassfilterungsvorgangs auf das Steuersignal ein tiefpassgefiltertes Steuersignal an den Motorantriebsteil (8) ausgibt.

2. Getriebe (20) nach Anspruch 1, wobei der Steuerteil (7) immer einen Tiefpassfilterungsvorgang auf das Steuersignal anwendet.

3. Getriebe (20) nach Anspruch 1 oder 2, wobei das Steuersignal ein Pulsbreitenmodulationsregelsignal zum Regeln des Tastverhältnisses der Impulsspannung ist.

4. Fahrzeug (1) mit einem Getriebe (20) nach Anspruch 1, 2 oder 3.

5. Fahrzeug (1) nach Anspruch 4, das ferner Folgendes umfasst:
eine mit der Antriebswelle (11) verbundene Antriebsquelle zum Bilden einer Antriebsquelleneinheit (2) in Verbindung mit dem Getriebe (20); und
einen Fahrzeugkarosserierahmen (9),
wobei die Antriebsquelleneinheit (2) direkt am Fahrzeugkarosserierahmen (9) so angebracht ist, dass sie drehbar ist.

6. Fahrzeug (1) nach Anspruch 4 oder 5, das in Form eines zweirädrigen Kraftfahrzeugs bereitgestellt wird.

7. Steuerverfahren für einen Übersetzungsverhältnisänderungsmechanismus (20a) mit einer Antriebswelle (11), einer Abtriebswelle (22a1) und einem Motor (30) zum kontinuierlichen Variieren eines Übersetzungsverhältnisses zwischen der Antriebswelle (11) und der Abtriebswelle (22a1); wobei das Steuerverfahren Folgendes beinhaltet:
Anwenden eines Tiefpassfilterungsvorgangs auf ein Steuersignal zum Ändern wenigstens eines Tastverhältnisses und einer Impulshöhe der Impulsspannung; und
Anlegen der durch ein tiefpassgefiltertes Steuersignal geregelten Impulsspannung an den Motor (30) zum Antreiben des Motors (30).

## Revendications

1. Transmission (20), comprenant :
un mécanisme de changement du rapport de transmission (20a), comportant un arbre d'entrée (11), un arbre de sortie (22a1) et un moteur (30), pour changer en continu un rapport de transmission entre l'arbre d'entrée (11) et l'arbre de sortie (22a1) ;
une section d'entraînement du moteur (8) pour appliquer une tension d'impulsion au moteur (30) ; et
une section de commande (7), pour transmettre à la section d'entraînement du moteur (8) un signal de commande afin de changer au moins un paramètre, un rapport cyclique ou une hauteur d'impulsion de la tension d'impulsion ; **caractérisée en ce que**
la section de commande (7) transmet à la section d'entraînement du moteur (8) un signal de commande à filtrage passe-bas après l'application d'un processus de filtrage passe-bas au signal de commande.

2. Transmission (20) selon la revendication 1, dans laquelle la section de commande (7) applique toujours un processus de filtrage passe-bas au signal de commande.

3. Transmission (20) selon les revendications 1 ou 2, dans laquelle le signal de commande est un signal de commande à modulation d'impulsions en largeur, pour contrôler le rapport cyclique de la tension d'impulsion.

4. Véhicule (1), comprenant une transmission (20) selon les revendications 1, 2 ou 3.

5. Véhicule (1) selon la revendication 4, comprenant en outre :
une source d'entraînement, connectée à l'arbre d'entrée (11) pour former une unité de source d'entraînement (2) en combinaison avec la transmission (20) ; et
une ossature de la carrosserie du véhicule (9) ;
l'unité de source d'entraînement (2) étant fixée directement sur l'ossature de la carrosserie du véhicule (9), de sorte à pouvoir pivoter.

6. Véhicule (1) selon les revendications 4 ou 5, fourni sous forme d'un véhicule à moteur à deux roues.

7. Procédé de commande d'un mécanisme de changement du rapport de transmission (20a), comportant un arbre d'entrée (11), un arbre de sortie (22a1), et un moteur (30) pour changer en continu un rapport de transmission entre l'arbre d'entrée (11) et l'arbre de sortie (22a1), le procédé de commande comprenant les étapes ci-dessous :
application d'un processus de filtrage passe-bas à un signal de commande, pour changer au moins un paramètre, un rapport cyclique ou une hauteur d'impulsion d'une tension d'impulsion ; et
application au moteur (30) de la tension d'impulsion contrôlée par un signal de commande à filtrage passe-bas pour entraîner le moteur (30).
